# FASCICULE DE BREVET EUROPEEN

(11) **EP 4 142 984 B1**
(45) Date de publication et mention de la délivrance du brevet: **08.11.2023**
(21) Numéro de dépôt: 21773355.9
(22) Date de dépôt: 07.09.2021
(51) Int. Cl.: B25J 9/00

(54) **EXOSQUELETTE COMPRENANT UN ÉLÉMENT ÉLASTIQUE**
EXOSKELETT MIT EINEM ELASTISCHEN ELEMENT
EXOSKELETON COMPRISING AN ELASTIC ELEMENT

(30) Priorité: 08.09.2020 FR 2009098
(43) Date de publication de la demande: 08.03.2023
(73) Titulaire: Human Mechanical Technologies, 65000 Tarbes (FR)
(72) Inventeur: MASSONNIER, Simon, 65000 TARBES (FR)
(74) Mandataire: Ipside
(86) Numéro de dépôt international: PCT/EP2021/074543
(87) Numéro de publication internationale: WO 2022/053447

(56) Documents cités:
- CN-A- 110 434 841
- DE-A1-102018 127 553
- FR-A1- 3 081 116
- US-A1- 2020 078 200

## Description

### DOMAINE TECHNIQUE DE L'INVENTION

Le domaine de l'invention est celui des exosquelettes, c'est-à-dire des structures mécaniques qui doublent en partie le squelette humain dans le but de l'assister dans la réalisation d'une tâche ou d'une activité, tel le soulèvement et le portage d'une charge.

Par le terme « charge », on entend dans le présent texte, un poids supporté par un utilisateur, c'est-à-dire le poids de ses propres membres supérieurs additionné éventuellement du poids ou d'une force exercée par un ou plusieurs objets manipulés.

Plus précisément, l'invention concerne un exosquelette comprenant un élément élastique générant un moment de force de compensation d'une charge, de manière à soulager le porteur de l'exosquelette dans la réalisation d'une tâche ou activité.

L'invention trouve notamment des applications dans les domaines médicaux, militaires, et du travail physique/manuel, dans lequel l'invention permet de prévenir notamment l'apparition de troubles musculosquelettiques.

### ÉTAT DE LA TECHNIQUE

Il est connu de l'art antérieur des techniques d'exosquelettes permettant de soulager le porteur lors de la réalisation de tâches pénibles, répétitives et présentant notamment l'apparition de troubles musculosquelettiques.

Il est également connu de l'art antérieur des techniques d'exosquelettes à visée médicale et militaire, visant à rétablir les performances physiques d'une personne affaiblie physiquement, ou bien d'augmenter celles d'une personne valide.

Sont ainsi connues des solutions d'exosquelettes utilisant des moyens mécaniques divers, comme des moyens robotisés faisant appel notamment à des vérins.

L'inconvénient de tels systèmes robotisés est en particulier leur masse importante, leur coût d'acquisition et d'entretien conséquent, ainsi que la nécessité de l'accès à une source d'énergie, par exemple électrique ou hydraulique, généralement lourde et encombrante lorsqu'elle est embarquée sur l'exosquelette, et présentant une autonomie généralement faible.

Sont également connus des systèmes purement mécaniques, c'est-à-dire ne comportant notamment aucun actionneur électromécanique ou hydromécanique, et ne nécessitant aucune source d'énergie embarquée.

Un grand nombre de tels systèmes reposent notamment sur l'utilisation de câbles, poulies ou tiges agencés de manière à soutenir les membres du porteur, le système étant autonome en énergie par le stockage de l'énergie apportée de l'extérieur du système sous forme d'énergie élastique, le stockage étant effectué par la déformation d'éléments élastiques lors du déplacement des membres du porteur.

De tels systèmes permettent d'écarter une partie des inconvénients précités, cependant les solutions connues de l'art antérieur se révèlent être encombrantes et comportent de nombreux éléments préjudiciables à la liberté de mouvement et à l'ergonomie pour le porteur.

De plus, les systèmes connus supportent généralement des efforts importants sur leur composantes centrales, nécessitant un dimensionnement important augmentant la masse de l'exosquelette, ou nécessitant des remplacements de pièces plus fréquents lorsqu'une optimisation de la masse est recherchée.

Le document US 2020/078200 A1 montre un exosquelette comportant un bras muni à son extrémité avant d'un moyen d'attache d'un membre supérieur du porteur, une structure porteuse destinée être fixée au porteur et comportant un point de support, un organe de compensation fixé audit bras par un premier pivot, s'étendant entre ledit bras et ladite structure porteuse à laquelle ledit organe est fixé, exerçant un moment de force de compensation sur ledit bras par la déformation d'un élément élastique, et un élément de transmission d'efforts fixé audit bras par un second pivot situé à l'extrémité arrière dudit bras, l'élément élastique et l'élément de transmission d'efforts étant sollicités en continu en traction et étant configurés de sorte que le moment de force varie avec l'inclinaison du bras. Aucun des systèmes actuels ne permet de répondre simultanément à tous les besoins requis, à savoir de proposer une technique d'exosquelette non motorisé et non robotisé répondant à des critères de masse, coût, et encombrement réduits, tout en proposant une conception simple et une durée de vie importante.

### EXPOSÉ DE L'INVENTION

La présente invention vise à remédier à tout ou partie des inconvénients de l'état de la technique cités ci-dessus.

À cet effet, l'invention vise, un exosquelette adapté pour assister, en utilisation, au moins un membre supérieur d'un porteur dudit exosquelette lors du soulèvement et du portage d'une charge, ledit exosquelette comprenant :
- au moins un bras comportant à l'une de ses extrémités dite « extrémité avant », au moins un moyen d'attache d'un membre supérieur du porteur,
- une structure porteuse destinée à être fixée au porteur et comportant au moins
   un point de support,
- au moins un organe de compensation fixé audit bras par un premier pivot, s'étendant entre ledit bras et ladite structure porteuse à laquelle ledit organe est fixé, et exerçant un moment de force de compensation sur ledit bras par la déformation d'au moins un élément élastique,
- un élément de transmission d'efforts s'étendant entre un point bas de l'organe de compensation et une extrémité dite « extrémité arrière » dudit bras opposée à l'extrémité avant,

l'au moins un élément élastique et ledit élément de transmission d'efforts étant sollicités en continu en traction lors de l'utilisation de l'exosquelette, et étant configurés de sorte que le moment de force varie avec l'inclinaison du bras , et
ledit élément de transmission étant fixé au bras par un second pivot situé à
l'extrémité arrière du bras, le premier pivot étant situé entre le second pivot et l'extrémité avant du bras.

Grâce à ces dispositions, il est possible de proposer une technique d'exosquelette entièrement autonome en énergie, grâce au stockage de l'énergie dans l'élément élastique, et ce avec une masse et encombrement réduit, aucun réservoir de stockage d'énergie n'étant nécessaire.

De plus, l'exosquelette propose également une assistance à l'utilisateur cohérente avec l'effort à fournir, c'est-à-dire de fournir un effort de compensation, plus précisément un moment de force de compensation, plus important dans une position de travail, dans laquelle l'utilisateur manipule une charge par exemple, et moins important lorsqu'il est dans une position de repos, les bras le long du corps en direction de ses pieds.

L'exosquelette s'étendant entre la taille de l'utilisateur et son membre supérieur, le bras de l'exosquelette est situé sous le membre supérieur en utilisation. Le bras de l'exosquelette n'est ainsi sollicité qu'en flexion et non pas en flexion et torsion comme cela est le cas dans les exosquelettes connus de l'art antérieur, permettant d'atteindre une plus grande longévité et également des dimensions plus réduites. Plus précisément, le dimensionnement d'un bras sollicité en flexion mais non en torsion se traduit en un profil réduit, comparé à un bras sollicité de plus en torsion. De plus, une conception du bras en matériaux composites est ainsi rendue possible, ce type de matériaux présentant des propriétés de résistance élevée à la flexion, mais peu à la torsion. L'utilisation par exemple de matériaux comprenant des fibres de verre ou de carbone est ainsi rendue possible, permettant d'obtenir un bras d'exosquelette de masse fortement réduite par rapport aux techniques d'exosquelette connues.

De plus, la structure formée par l'organe de compensation, le bras, et l'élément de transmission d'efforts étant autocontrainte, c'est-à-dire que les éléments précités ainsi que leurs composantes forment une structure s'équilibrant sous le jeu de contraintes de compression et de tension. En particulier, l'élément de transmission d'efforts et l'élément élastique sont sollicités purement en tension, les autres composantes de l'organe de compensation et le bras étant sollicités en compression. Le bras comportant également un point d'application de la charge, ce dernier est sollicité en flexion comme évoqué ci-dessus, le système d'éléments autocontraints ne formant ainsi pas un système dit de « tenségrité » parfait, mais s'en approchant très fortement. En particulier, en l'absence de charge, la masse du bras pouvant être négligée, le système se trouve dans un état de quasi-tenségrité. On comprend que l'équilibre de la structure est dynamique, car variant sous l'effet de la charge, le ou les éléments élastiques permettant d'atteindre l'équilibre par leur tension variable.

La présence d'un seul élément élastique permet d'obtenir un comportement de sortie « basique » de l'exosquelette, la force de compensation ressentie par l'utilisateur variant de manière sinusoïdale, avec un maximum ressenti au niveau d'une position dite « de travail », et d'un minimum dans des positions extrêmes « basse » et « haute ».

Cependant, l'exosquelette selon l'invention peut comprendre un nombre plus important d'élément élastiques, ce nombre étant théoriquement illimité. En effet, il est possible de concevoir un organe de compensation présentant une pluralité d'éléments élastiques en série ou en parallèle, permettant d'obtenir des comportements de sortie de l'exosquelette divers. Il est notamment possible d'utiliser des éléments élastiques de constante élastique différentes, permettant de varier davantage encore le comportement de sortie.

La multiplication des éléments élastiques permet de plus de concevoir un organe de compensation de formes variées, notamment curviligne, permettant de suivre au plus près la ligne du corps de l'utilisateur.

De plus, selon la conception de l'exosquelette, en partant de positions extrêmes vers une position intermédiaire, la force de compensation augmente, préférentiellement de manière monotone, afin de compenser de plus en plus la charge, qui est de plus en plus difficile à porter ou manipuler pour l'utilisateur. De cette manière, l'utilisateur ressent un soutient progressif permettant de réaliser des gestes fluides. En particulier, la force ressentie par l'utilisateur suit un tracé globalement sinusoïdal, se traduisant en une compensation élevée dans les positions aux alentours de la position de travail, et plus faible dans les positions extrêmes ne nécessitant qu'une compensation modérée. De plus, une telle évolution de la force de compensation selon la position du membre supérieur correspond à l'évolution de la force qu'exerce un membre supérieur sur l'épaule du porteur, si bien que l'exosquelette compense la charge représentée par le membre supérieur, dans toutes ses positions angulaires, de manière à soulager le porteur de l'exosquelette en permanence.

Dans des modes de réalisation particuliers de l'invention, ledit bras comporte un mécanisme de réglage de la distance entre lesdits premier pivot et second pivot.

Grâce à ces dispositions, le bras de levier sur lequel agit la force de compensation peut être varié, variant ainsi le moment de force de compensation disponible. Ainsi, l'utilisateur peut, de manière très simple, adapter la « puissance » de sortie de l'exosquelette selon le type de tâche ou d'activité qu'il souhaite réaliser.

Dans des modes de réalisation particuliers de l'invention, le mécanisme de réglage comprend :
- une ouverture du premier pivot dans laquelle le bras est apte à coulisser,
- une platine de réglage située à l'une des extrémités du bras, ladite platine étant solidaire d'une vis sans fin coopérant avec une ouverture filetée dudit pivot.

Grâce à ces dispositions, le réglage est particulièrement simple d'accès et intuitif, permettant de rendre l'utilisation de l'exosquelette possible à un large panel d'utilisateurs, sans formation particulière à l'utilisation d'exosquelettes. Il est également réalisable par l'utilisateur seul, sans assistance, et sans devoir retirer l'exosquelette, permettant ainsi d'adapter le moment de force souhaité « en temps réel », en fonction des conditions d'utilisation de l'exosquelette.

Dans des modes de réalisation particuliers de l'invention, l'organe de compensation comprend un élément élastique se trouvant dans
- un état de tension minimale lorsque le membre supérieur est situé dans une première position extrême dite « haute » et
- dans un état de tension maximale lorsque le membre supérieur est situé dans une seconde position extrême dite « de repos », et
- la tension dudit élément élastique entrainant une rétraction de l'organe de compensation, se trouvant dans un état déployé et respectivement dans un état rétracté maximal lorsque le membre supérieur est situé dans la position haute, respectivement de repos* ;

Grâce à ces dispositions, l'organe de compensation agit en compression sur le bras de l'exosquelette tout en utilisant un élément élastique agissant en tension, plus simple qu'un élément agissant en compression.

Le bras de l'exosquelette subit un moment de force tendant à le faire pivoter autour d'un point de rotation vers la position de repos. La force de compensation (dont est issu le moment de compensation) peut être appliquée entre le point de rotation et le point d'application de la charge par l'utilisation d'un organe de compensation agissant en compression. A l'inverse, de nombreux systèmes connus de l'art antérieur dont l'organe de compensation agit en tension sont contraints d'appliquer la force de compensation à l'opposé du point d'application de la charge, allongeant ainsi la longueur du bras de l'exosquelette et augmentant son encombrement. Une telle conception résout donc un problème jusque-là sans issue, à savoir d'obtenir un exosquelette avec un bras compact, ne dépassant pas significativement du corps du porteur, tout en utilisant un élément élastique de traction, plus léger, moins cher et moins encombrant qu'un élément de compression équivalent.

Dans des modes de réalisation particuliers de l'invention, l'organe de compensation comporte
- une barre supérieure et
- une barre inférieure, lesdites barres étant parallèles et
- une extrémité supérieure de la barre inférieure étant solidaire d'une platine supérieure et
- une extrémité inférieure de la barre supérieure étant solidaire d'une platine inférieure,
la barre supérieure, respectivement inférieure, coulissant dans une ouverture de la platine supérieure, respectivement inférieure, et ledit élément élastique s'étendant entre la platine supérieure et la platine inférieure

Grâce à ces dispositions, il est possible de réaliser l'exosquelette selon l'invention avec des composant simples, peu coûteux et facilement procurables sur le marché.

De plus, grâce à ces dispositions, l'organe de compensation est à la fois suffisamment rigide et simple de conception. La cinématique ainsi créée permet de doubler la longueur de l'organe de compensation dans un état déployé.

De plus, une conception à l'aide de deux barres (ou tubes) parallèles permet de réduire les positions dans lesquelles le porte à faux sur chacune des barres est important. En effet, ces positions sont limitées à une position déployée ou proche de la position déployée, dans le restant des positions les platines supérieures et inférieures viennent réduire la longueur de porte à faux de chacune des barres, limitant ainsi grandement le risque de flambage des barres.

Les solutions connues de l'art antérieur proposent des organes de compensation évoluant au-delà du membre supérieur en direction des épaules de l'utilisateur, et ce avec souvent une seule barre ou un seul tube, tandis que la conception proposée par la présente invention permet de limiter la longueur de l'organe de compensation à la distance séparant le point de support et le premier pivot, c'est-à-dire environ la distance séparant la taille et le membre supérieur de l'utilisateur. Cette distance étant couverte par deux barres, et ces dernières étant guidées par des platines, les risques de flambages sont grandement diminués par rapport à l'art antérieur connu. Ainsi, il est possible d'utiliser des barres ou tubes de dimensions fortement réduites, permettant d'alléger encore davantage l'exosquelette, par rapport aux solutions connues.

Dans des modes de réalisation particuliers de l'invention, l'au moins un élément élastique est un câble élastique comportant une âme élastique, préférentiellement en caoutchouc, et une gaine de protection, préférentiellement en matériau tissé possédant une capacité élastique.

Grâce à ces dispositions, l'élément élastique est constitué d'un élément particulièrement, léger, peu coûteux et simple à procurer.

Dans des modes de réalisation particuliers de l'invention, l'élément de transmission d'efforts comporte un élément longiforme sensiblement sans capacité de déformation élastique

Dans des modes de réalisation particuliers de l'invention, l'élément de transmission d'efforts comporte deux élément longiformes s'étendant parallèlement l'un à l'autre de part et d'autre de l'organe de compensation.

De cette manière, l'élément de transmission d'efforts est disposé de part et d'autre de l'organe de compensation, rendant la conception de l'exosquelette selon l'invention particulièrement compacte.

Dans des modes de réalisation particuliers de l'invention, l'élément longiforme est un câble.

Grâce à ces dispositions, l'exosquelette selon l'invention est particulièrement léger, sans sacrifier de performances structurelles, l'élément de transmission d'efforts étant sollicité en tension uniquement et pouvant être réalisé à l'aide de câbles.

Dans des modes de réalisation particuliers de l'invention, ledit point de support est un logement sphérique et l'organe de compensation comporte une tête sphérique, de manière à former une liaison rotule.

Grâce à ces dispositions, l'organe de compensation et le bras de l'exosquelette peuvent effectuer des rotations autour de tous les axes de l'espace, permettant de préserver la liberté de mouvement du membre supérieur de l'utilisateur.

Dans des modes de réalisation particuliers de l'invention, ladite structure porteuse est une ceinture pelvienne adaptée pour enserrer les hanches et/ou la taille du porteur

Grâce à ces dispositions, l'exosquelette est maintenu sur l'utilisateur au niveau d'une zone du corps permettant de rattraper des efforts importants, et participe ainsi à abaisser le risque de blessures ou d'apparition de troubles musculosquelettiques.

Il convient également de souligner que l'exosquelette est maintenu sur l'utilisateur uniquement au niveau de sa taille/ de ses hanches, et au niveau de son membre supérieur, mais qu'aucun autre moyen de support, notamment au niveau des épaules, par exemple *via* des bretelles, n'est nécessaire.

Dans des modes de réalisation particuliers de l'invention, ledit moyen d'attache comporte un coussin longitudinal, les projections de l'axe dudit coussin et de l'axe du bras sur un plan dit « horizontal » se coupant selon un angle compris entre 0 et 30 degrés, lorsque l'exosquelette est situé dans une position dite « de travail ».

Grâce à ces dispositions, l'exosquelette ne présente pas de risque de collision avec les flancs et les aisselles de l'utilisateur, augmentant ainsi la sécurité et le confort d'utilisation de l'exosquelette.

Il est ainsi également possible pour l'utilisateur d'effectuer des mouvements à plus de 90° vers sa droite et sa gauche, en position de travail, le risque de collision de l'exosquelette avec l'utilisateur étant supprimé grâce aux dispositions précitées.

### BRÈVE DESCRIPTION DES FIGURES

D'autres avantages, buts et caractéristiques particulières de la présente invention ressortiront de la description non limitative qui suit d'au moins un mode de réalisation particulier des dispositifs et procédés objets de la présente invention, en regard des dessins annexés, dans lesquels :
[Fig 1] la figure 1 est une vue schématique en perspective de l'exosquelette selon l'invention porté par l'utilisateur.
[Fig 2] la figure 2 est une vue schématique en perspective de l'exosquelette isolé se trouvant dans la position dite « de travail ».
[Fig 3] la figure 3 est une vue schématique en perspective de l'exosquelette isolé se trouvant dans la position dite « de repos ».
[Fig 4] la figure 4 est une vue schématique en perspective de l'exosquelette isolé se trouvant dans la position dite « haute ».
[Fig 5] la figure 5 est un graphe de l'évolution de la force de compensation en fonction de l'angle d'inclinaison du bras par rapport à l'horizontale.
[Fig 6] la figure 6 est une vue de dessus de l'exosquelette dans une position dite « de travail ».
[Fig 7] la figure 7 est une vue en perspective de l'exosquelette dans une position dite « de travail », l'utilisateur écartant les bras sans que les bras des modules ne rentrent en collision avec ses flancs.

### DESCRIPTION DÉTAILLÉE DE L'INVENTION

La présente description est donnée à titre non limitatif, chaque caractéristique d'un mode de réalisation pouvant être combinée à toute autre caractéristique de tout autre mode de réalisation de manière avantageuse.

On note, dès à présent, que les figures ne sont pas à l'échelle.

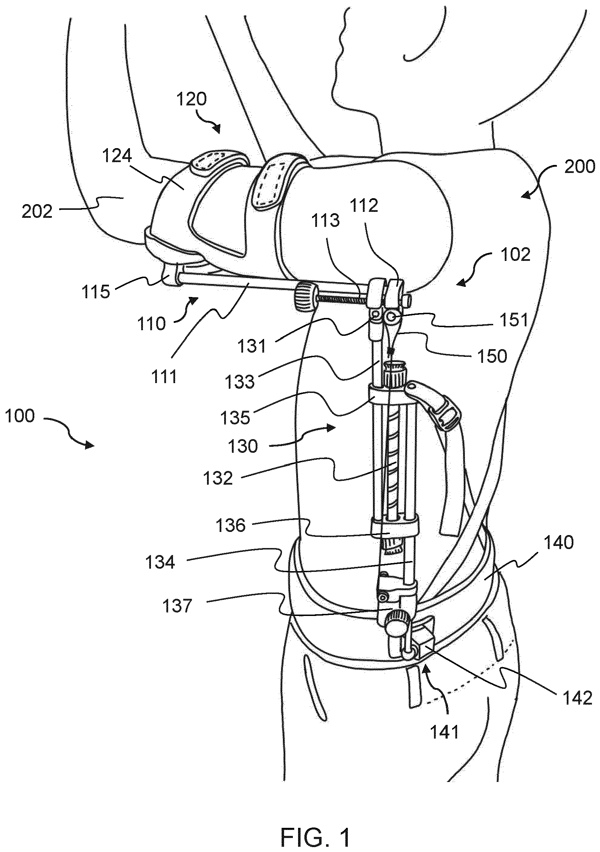

La présente invention concerne un exosquelette 100, représenté à la figure 1, dans un état où ce dernier est porté par un individu 200, ci-après désigné également par « utilisateur » ou « porteur ». Il convient de préciser que bien que l'exosquelette 100 comprenne généralement un module droit 101, adapté pour soulager un membre supérieur droit 201 de l'utilisateur, et un module gauche 102, adapté pour soulager un membre supérieur gauche 202 de l'utilisateur, pour des raisons de concision il ne sera fait par la suite référence qu'à l'un des deux modules, à savoir le module gauche 102, et le terme « gauche » sera omis pour des raisons de concision également. On précise également que les deux modules droite 101 et gauche 102 sont identiques ou similaires d'un point de vue structurel, et sont symétriques par rapport au porteur.

Il est également possible de réaliser un exosquelette 100 comprenant qu'un seul module, droit ou gauche, selon l'application souhaitée, ou selon les caractéristiques physiques de l'utilisateur.

Comme cela est illustré à la figure 1, chaque module de l'exosquelette est prévu pour soulager le membre supérieur correspondant, c'est-à-dire de réduire l'effort physique fourni par l'utilisateur, se traduisant en une activité musculaire, et donc notamment une activité cardiaque et respiratoire, plus faible. De cette manière, l'utilisateur est soumis à des conditions d'activité moins épuisantes physiquement, permettant de préserver la santé de l'utilisateur.

De manière inverse, il est cependant également possible d'augmenter les capacités physiques de l'utilisateur, à effort physique égal (comparé à une activité sans exosquelette selon l'invention). En d'autres termes, il est possible d'accroitre la force avec laquelle l'utilisateur peut soulever, porter ou manipuler une charge, c'est-à-dire inversement diminuer le poids de la charge ressenti par l'utilisateur.

Plus précisément, la force générée par la charge sur l'exosquelette (non représentée sur la figure 1) correspond principalement au poids de la charge.

On comprend aisément que cette charge exerce des efforts sous forme de forces et de moments sur l'exosquelette, les efforts exercés par la charge ayant tendance à agir à l'encontre des efforts de l'utilisateur 200. L'exosquelette a ainsi pour fonction principale d'agir contre ces efforts exercés par la charge et de soutenir les efforts de l'utilisateur 200.

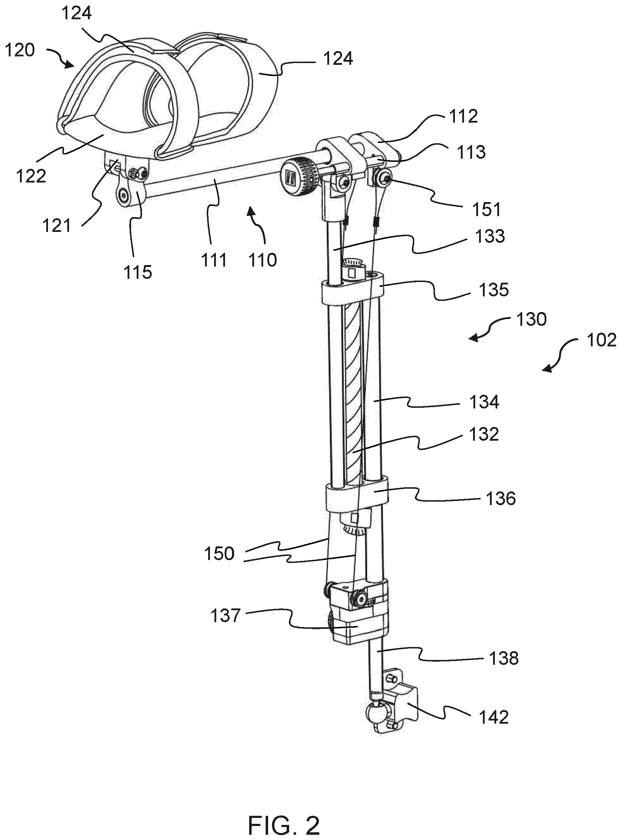

La figure 2 représente le module gauche 102 comprenant un bras 110, dans une position dite « de travail » ou « intermédiaire », dans laquelle le bras 110 est globalement horizontal, le membre supérieur gauche de l'utilisateur 200 étant également globalement horizontal, bien qu'un défaut de parallélisme entre le bras 110 et le membre supérieur de l'utilisateur puisse subsister. On entend par globalement horizontal une orientation globalement parallèle au sol et globalement orthogonale au corps de l'utilisateur 200. Le bras 110 et le membre supérieur sont donc orientés vers l'avant, lorsque l'utilisateur 200 est en station debout, dans cette position caractéristique. Cette position est dite « de travail » car elle correspond à une position dans laquelle l'utilisateur 200 porte une charge dans ses mains, ou manipule un outil, par exemple.

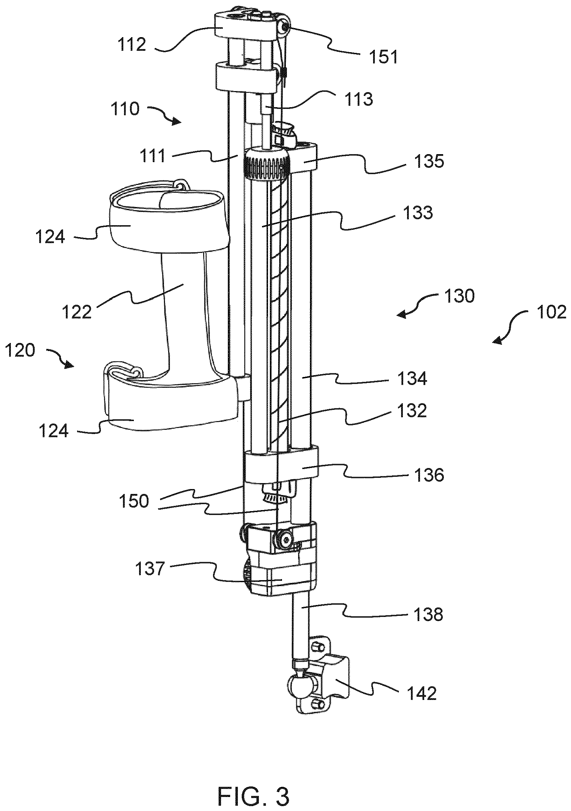

La figure 3 représente le module 102 dans une première position extrême dite « de repos » ou « basse », dans laquelle le membre supérieur de l'utilisateur 200 est globalement vertical, c'est-à-dire globalement orthogonal au sol et globalement parallèle au corps de l'utilisateur 200, et orienté vers le bas, lorsque l'utilisateur 200 est en station debout. Cette position est dite « de repos » car elle correspond à une position dans laquelle les bras et les mains de l'utilisateur 200 sont alignés le long du corps vers le bas, ne permettant généralement pas la réalisation d'une tâche ou d'une activité.

On note cependant que dans cette position caractéristique, le bras 110 n'est pas strictement vertical, mais forme un angle entre 0 et 45° avec le bras du membre supérieur de l'utilisateur, dans un plan parallèle au plan sagittal du porteur. Cette position correspond cependant bien à une position extrême du bras d'un point de vue mécanique, dans lequel l'exosquelette est pratiquement entièrement replié, comme cela est visible sur la figure 3.

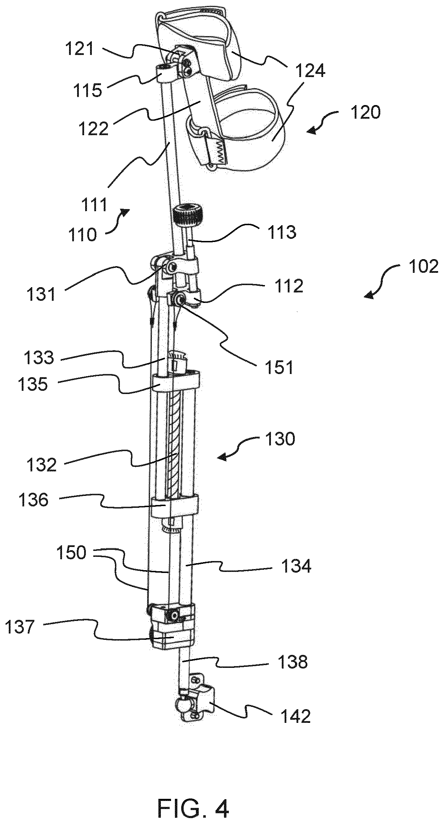

La figure 4 représente le module 102 dans une seconde position extrême dite « haute », dans laquelle le membre supérieur de l'utilisateur 200 est globalement vertical, c'est-à-dire globalement orthogonal au sol et globalement parallèle au corps de l'utilisateur 200, et orienté vers le haut, lorsque l'utilisateur 200 est en station debout. On précise que cette position extrême « haute » n'est pas strictement une position verticale du bras 110, mais une position située dans une plage angulaire entre la verticale et environ 15° vers l'avant de cette position. Cette position dite « haute » correspond à une position dans laquelle les bras et les mains de l'utilisateur 200 sont sensiblement parallèles au corps de l'utilisateur et orientés vers le haut, par exemple pour atteindre un objet situé en hauteur, ou pour l'utilisation d'un outil au-dessus de l'utilisateur.

Comme cela est visible sur la figure 4, l'exosquelette n'est pas entièrement déployé dans cette position extrême « haute », afin de procurer une assistance à l'utilisateur, même dans cette position extrême. De plus, ce léger pliage de l'exosquelette l'amène à se replier, c'est-à-dire à évoluer vers une position proche de la position intermédiaire.

Ainsi, on comprend que l'exosquelette 100 est, en utilisation, orienté en fonction du corps de l'utilisateur 200, ce dernier dans sa station debout et en particulier dans la position dite « de travail » représentant un référentiel permettant d'identifier des positions relatives qualifiées de « haute », « basse », « avant » et « arrière », ainsi que « supérieure » et « inférieure ».

Comme cela est visible sur les figures 2 à 4 notamment, le bras 110 du module de l'exosquelette 100 comporte un moyen d'attache 120 du membre supérieur 102 du porteur 200. Ainsi, en utilisation, le bras 110 de l'exosquelette est globalement parallèle au membre supérieur 102, et plus précisément parallèle au bras dudit membre supérieur. Cependant, un défaut de parallélisme apparaît en particulier dans des positions proches des positions extrêmes « de repos » et « haute ».

Un organe de compensation 130 de forme globalement longitudinale est fixé de manière pivotante au bras 110, *via* un premier pivot simple 131. L'axe du premier pivot 131 est sensiblement perpendiculaire au bras 131 et à l'organe de compensation 130, comme cela est visible sur la figure 2 notamment. On remarque que la référence 131 désigne par la suite le premier pivot d'un point de vue mécanique mais également la pièce sur laquelle est agencée le point de pivot.

Une structure porteuse 140 comportant un point de support 141 supporte l'organe de compensation 130, et par extension le bras 110.

En d'autres termes, l'organe de compensation 130 est situé entre la structure porteuse 140 et le bras 110.

Avantageusement, la structure porteuse 140 est une ceinture pelvienne (ou abdominale), adaptée pour enserrer les hanches et/ou la taille du porteur, selon la manière dont l'utilisateur porte l'exosquelette 100.

Une telle ceinture est avantageusement en matière textile, et comporte préférentiellement au moins une boucle de fermeture, pouvant être ajustable. Il est également envisageable que la ceinture comporte une boucle de réglage, avantageusement située à l'opposé de la boucle de fermeture, afin d'augmenter l'amplitude de réglage possible.

Le point de support 141 est dans le présent exemple une platine de support 142 fixée sur la structure de support 140 et muni d'un logement sphérique.

L'organe de compensation 130 possède à son extrémité dite « basse », c'est-à-dire à son extrémité à proximité de la structure porteuse 140, une tête sphérique adaptée pour être introduite dans le logement sphérique de la platine de support 142, de manière à constituer conjointement une liaison rotule, autorisant à l'organe de compensation 130 trois degrés de rotation indépendants, par rapport à la structure porteuse 140.

Il est cependant également possible, et même souhaitable dans certaines combinaisons, de n'avoir que deux, un, voire aucun degré de liberté en rotation entre l'organe de compensation 130 et la structure porteuse 140. Dans ce cas, la liaison rotule peut être remplacée par exemple par un double pivot, un simple pivot ou un encastrement.

L'organe de compensation 130 exerce un moment de force de compensation sur le bras 110, le moment variant avec la position du membre supérieur 202, et donc du bras 110.

Le moment de force de compensation est avantageusement généré par la déformation d'un élément élastique 132 de l'organe de compensation 130. Ainsi, on comprend que l'énergie mise à disposition de l'utilisateur est stockée uniquement dans l'élément élastique 132 sous forme d'énergie élastique, et qu'aucune autre source d'énergie n'est nécessaire, conférant ainsi à l'exosquelette une grande légèreté, compacité et autonomie.

Plus particulièrement, un moment de force de compensation maximal est exercé lorsque le membre supérieur 202 est situé dans la position intermédiaire dite « de travail ». Cette caractéristique est particulièrement avantageuse dans la mesure où dans cette position, l'utilisateur 200 nécessite le plus d'assistance de la part de l'exosquelette 100.

Un premier moment de force de compensation minimal est exercé lorsque le membre supérieur 202 est situé dans la première position extrême dite « de repos » ou « basse ».

Un second moment de force de compensation minimal étant exercé lorsque le membre supérieur 202 est situé dans la seconde position extrême dite « haute ».

Avantageusement, les deux moments de force de compensation minimaux sont sensiblement égaux à zéro, de manière à ne pas exercer d'effort sur l'utilisateur lorsque son membre supérieur 202 est dans l'une des positions « haute » ou « basse ».

Le moment de force est par ailleurs croissant depuis la première position extrême dite « haute » jusqu'à la position intermédiaire dite « de travail » et décroissant depuis la position intermédiaire dite « de travail » jusqu'à la seconde position extrême dite « de repos ». Plus précisément, le moment de force est également monotone respectivement sur les deux plages précitées, de manière à fournir un moment de force de compensation augmentant continuellement lors du passage d'une des deux positions extrêmes à la position intermédiaire.

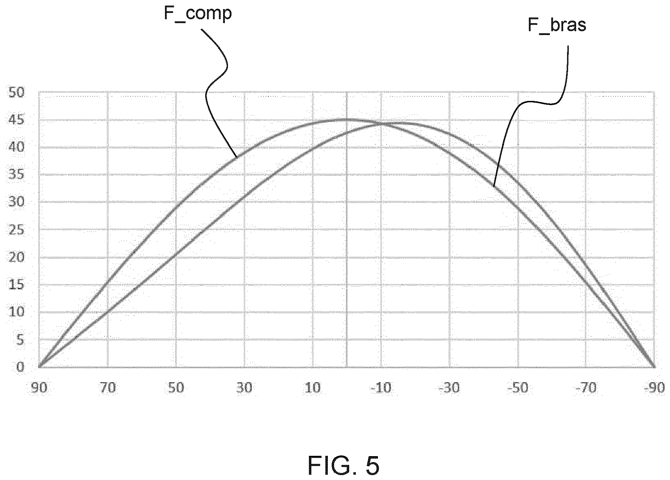

La figure 5 illustre l'évolution de la force de compensation F_comp exercée par l'exosquelette 100 sur le membre supérieur 202 en fonction de l'angle d'inclinaison du bras 110 par rapport à l'horizontale. La force F_comp est une représentation alternative du moment de force de compensation, permettant d'appréhender de manière immédiate la compensation ressentie par l'utilisateur.

Ainsi, sur la figure 5, où la force de compensation F_comp, exprimée en Newton [N], est représentée en fonction de l'angle formé entre le bras 110 et un axe horizontal, exprimé en degrés, la force de compensation maximale correspond approximativement à 45 N. En d'autres termes, dans cet exemple l'exosquelette 100 est capable de compenser une charge d'une masse légèrement supérieure à 4,5 kilogrammes portée par l'utilisateur (lorsque le bras 110 est situé à 0° par rapport à l'horizontale).

Comme cela est visible sur la figure 5, la force de compensation est nulle aux positions extrêmes correspondant à une inclinaison du bras 110 de +/- 90° par rapport à l'horizontale.

On note que la figure 5 illustre également la force F_bras exercée par l'organe de compensation sur le bras 110, dont le maximum est légèrement décalé vers la position dite « de repos ».

Comme cela a été évoqué plus en amont, la source d'énergie permettant de générer le moment de force lors du déplacement du membre supérieur 202 est l'élément élastique 132.

L'élément élastique 132 est situé sur l'organe de compensation 130 qui comprend, selon un mode de réalisation avantageux, une barre supérieure 133 et une barre inférieure 134, ces barres étant parallèles. Une extrémité supérieure de la barre inférieure 134 est solidaire d'une platine supérieure 135 et une extrémité inférieure de la barre supérieure 133 est solidaire d'une platine inférieure 136. La barre supérieure 133 coulisse dans une ouverture de la platine supérieure 135 et la barre inférieure 134 coulisse dans une ouverture de la platine inférieure 136. En d'autres termes, les barres supérieure 133 et inférieure 134 peuvent coulisser de manière à pouvoir prendre une pluralité de positions entre un état extrême rétracté de l'organe de compensation 130, dans lequel elles sont en vis-à-vis sur l'intégralité de leur longueur, et un état extrême déployé de l'organe de compensation 130, dans lequel les deux platines sont proches ou au contact l'une de l'autre.

L'élément élastique 132 s'étend entre la platine supérieure 135 et la platine inférieure 136 auxquelles il est fixé, et correspond préférentiellement à un ressort de tension, et plus préférentiellement à un câble élastique. Ainsi, le passage de l'état rétracté vers l'état déployé de l'organe de compensation 130 entraîne une mise sous tension de l'élément élastique 132, en d'autres termes, l'élément élastique 132 a tendance à entraîner l'organe de compensation 130 dans l'état rétracté.

De manière alternative, l'organe de compensation 130 peut être réalisé de manière plus compacte par l'utilisation d'une tige coulissant dans un tube, l'élément élastique étant fixé d'une part à une extrémité supérieure du tube et d'autre part à une extrémité inférieure de la tige. Ainsi, une tension de l'élément élastique introduit une rétraction de la tige dans le tube, l'organe de compensation entrant dans un état de compression, cherchant à revenir dans un état rétracté dans lequel l'élément élastique est dans un état de tension minimale. Cette solution présente l'avantage d'une grande compacité, l'encombrement état limité aux dimensions d'un seul tube et non plus de deux tubes.

On comprend ainsi que l'élément élastique 132 est principalement sollicité en traction, et ce en continu pendant l'utilisation de l'exosquelette 100, de manière à maintenir l'exosquelette 100 dans un état d'équilibre. D'autres sollicitations, secondaires et négligeables, peuvent cependant apparaître, les liaisons entre éléments n'étant mécaniquement pas parfaites.

Avantageusement, l'élément élastique 132 est un câble élastique comportant une âme élastique, préférentiellement en caoutchouc, et une gaine de protection, préférentiellement en matériau tissé possédant une capacité élastique. De tels câbles sont connus de l'état de la technique, notamment sous le nom de câble ou sangle dite « Sandow ».

La charge exerce une force au niveau du moyen d'attache 120, et ainsi un moment de force autour sur le bras 110, ce dernier étant rotatif.

Afin d'agir à l'encontre du moment de force exercé par la charge, un élément de transmission d'efforts 150, préférentiellement sans capacité de déformation élastique, s'étend entre un point bas de l'organe de compensation 130 et une extrémité arrière du bras 110 opposée à une extrémité avant dudit bras 110.

Plus précisément, ledit point bas de l'organe de compensation est, dans cet exemple de réalisation, une pièce de fixation inférieure 137 solidaire d'une barre de soutien 138 située entre la platine inférieure 136 et la structure porteuse 140. La barre de soutien 138 est par ailleurs munie à son extrémité dite « basse » de la tête sphérique introduite ci-avant.

L'élément de transmission d'efforts 150 est attaché à l'extrémité arrière du bras 110 à l'aide d'une pièce de fixation supérieure solidaire du bras 110, formant ainsi un second pivot 151, autour duquel le bras 110 peut pivoter. Ladite pièce de fixation supérieure forme une encoche pouvant se loger autour de la barre supérieure 133, afin d'accroitre l'amplitude de mouvement du bras 110, comme cela est visible sur la figure 4.

L'élément de transmission des efforts 150 peut être une pièce rigide longitudinale telle qu'une barre ou un tube. Cependant, l'élément de transmission des efforts 150 étant préférentiellement soumis à des contraintes de tension exclusivement, celui-ci comprend avantageusement un câble et des éléments de fixation du câble, rendant l'exosquelette 100 plus léger et simple de conception.

En particulier, un tel câble est un câble en matière métallique, avantageusement composé de fils d'acier tressés, connus de l'état de la technique sous le nom de câbles dits « Bowden » notamment. Un tel câble, dans son utilisation prévue dans la présente invention, peut être considéré comme étant globalement indéformable en traction dans sa dimension longitudinale, à l'instar d'un élément rigide tel qu'une tige ou un tube, et est assimilable à un élément longiforme sensiblement sans capacité de déformation élastique.

Comme cela est visible sur les figures 2 à 4, l'élément de transmission des efforts 150 est avantageusement constitué de deux câbles évoluant parallèlement et de manière symétrique de part et d'autre de l'organe de compensation 130.

On comprend ainsi que l'élément de transmission des efforts 150 est principalement sollicité en traction, et ce en continu pendant l'utilisation de l'exosquelette 100, de manière à maintenir l'exosquelette 100 dans un état d'équilibre. D'autres sollicitations, secondaires et négligeables, peuvent cependant apparaître, les liaisons entre éléments n'étant mécaniquement pas parfaites.

Il est par ailleurs prévu que la barre de soutien 138 puisse être plus ou moins rétractée à l'intérieur de la pièce 134, qui est dans ce cas un tube inférieur et non une barre inférieure. La pièce de fixation inférieure 137 est fixée au tube inférieur 134, et permet d'ajuster la position axiale relative de la barre de soutien 138 et du tube inférieur 134. Une telle fixation ajustable est par exemple effectuée par boulonnage, avantageusement muni d'une molette pour permettre un réglage simplifié sans outils, et directement accessible par l'utilisateur lorsque l'exosquelette est porté.

On comprend aisément que, en particulier en position intermédiaire, l'élément de transmission des efforts retient le bras 110 tendant à entrer en rotation autour du premier pivot 131, en rattrapant le moment généré par la charge.

La force générée par la charge est quant à elle compensée par l'élément élastique 132, qui génère une force de compensation par le fait de sa déformation.

Lors du mouvement du bras 110, de par la longueur constante de l'élément de transmission des efforts 150 et la cinématique de l'exosquelette 100, l'organe de compensation 130 se rétracte ou se déploie plus ou moins.

Lors d'un mouvement du bras 110, la force exercée par l'élément élastique varie et atteint un maximum lorsque le bras 110 est dans une position correspondant à la position dite « basse ». Cependant, le bras de levier (orthogonal à la force exercée par l'élément élastique) formé entre le premier pivot 131 et l'extrémité arrière du bras 110 est alors nul. A l'inverse, la force minimum exercée par l'élément élastique est atteinte dans la position dite « haute », dans laquelle elle correspond globalement au poids de la charge, l'assistance étant alors quasiment nulle.

En effet, dans cette la position extrême haute, les premier pivot 131 et second pivot 151, ainsi que le point d'application de la charge représenté par la pièce 115 sont alignés, le bras de levier de la force de compensation étant alors nul.

On comprend ainsi que l'assistance apportée par l'exosquelette est légèrement plus importante dans la plage des positions entre la position « basse » et la position « de travail », du fait de la force supérieure exercée par l'élément élastique 132 sur cette plage.

Comme il a été évoqué, la compensation offerte par l'exosquelette dépend du bras de levier orthogonal à la force de l'élément élastique, formé entre le premier pivot 131 et l'extrémité arrière du bras 110, c'est-à-dire de la distance entre le premier pivot 131 et l'extrémité arrière du bras 110.

La compensation souhaitée dépendant du type d'activité, de la charge et de la morphologie de l'utilisateur, la distance entre le premier pivot 131 et l'extrémité arrière du bras 110 est rendue réglable *via* un mécanisme de réglage du bras 110.

Le bras 110 est avantageusement composé d'une tige 111 apte à coulisser dans une ouverture du premier pivot 131, ladite ouverture étant situé sur la partie du premier pivot solidaire du bras 110.

Le bras 110 comporte une platine de réglage 112 à son extrémité arrière, qui comporte par ailleurs (ou est confondue avec) la pièce de fixation de l'élément de transmission d'efforts 150.

Une vis de réglage 113 sans fin est montée de façon à pouvoir tourner librement dans la platine de réglage 112, sans entrer en translation par rapport à celle-ci.

La vis de réglage 113 coopère avec une ouverture filetée de la partie du premier pivot 131 solidaire du bras 110, de manière à ce que la vis 113 s'étende de manière parallèle au bras 110.

Ainsi, la rotation de la vis 113 entraîne sa translation par rapport au premier pivot 131, et ainsi une translation du bras 110 par rapport au premier pivot 131, le bras 110 étant solidaire de la vis 113 *via* la platine de réglage 112.

Un tel mécanisme de réglage est particulièrement simple d'utilisation et accessible pour l'utilisateur. La facilité d'utilisation peut encore être améliorée en munissant la tête de la vis 113 d'une molette, évitant de devoir recourir à un outil pour le réglage.

Avantageusement, afin de réduire le couple exercé par l'utilisateur sur la tête de vis, nécessaire au réglage, des éléments de réduction des frottements sont intégré au mécanisme de réglage. Plus précisément, la vis 113 peut être supportée par des roulements, des coussinets, ou des bagues lubrifiées. De cette manière, le bras de levier peut être réglé pendant que l'exosquelette est en position de travail, permettant un réglage en utilisation et « en temps réel », de manière particulièrement intuitive pour l'utilisateur.

Comme cela a été évoqué plus en amont, le membre supérieur 202, plus particulièrement le bras, est fixé sur le moyen d'attache 120. Le moyen d'attache 120 peut être composé d'une simple brassière fixée au bras 110, cependant il est constitué avantageusement d'une brassière double et rigide.

A cet effet, un aileron d'attache 115 fixé sur l'extrémité avant du bras 110 coopère avec une patte d'accroche 121 du moyen d'attache 120. L'aileron 115 et la patte 121 sont reliés par exemple par boulonnage laissant un jeu, de sorte à permettre une rotation du moyen d'attache par rapport au bras 110. Cette rotation est limitée à une amplitude d'angle donnée, afin de permettre un passage fluide des positions extrêmes dites « de repos » et « haute » vers des positions intermédiaires. La limitation de la rotation est obtenue par exemple par l'utilisation d'un boulon parallèle au boulonnage d'accroche du moyen d'attache 120, de manière à ce que ledit boulon butte contre l'aileron 115 dans une première position angulaire extrême. Une seconde position angulaire extrême est définie par le coussin longitudinal introduit ci-après, butant contre le bras 110.

La patte d'accroche 121 est solidaire d'un coussin longitudinal (rigide ou mou) 122, avantageusement élargi à son extrémité proche du coude du porteur, en utilisation. Le coussin 122 suit avantageusement une partie du bras du membre supérieur, en direction de l'épaule du porteur.

De cette manière, le bras de l'utilisateur est soutenu sur une majeure partie de sa longueur et augmente ainsi le confort et l'efficacité de l'exosquelette 100.

Afin de maintenir le bras de l'utilisateur sur le coussin 122, ce dernier est muni d'au moins une, et préférentiellement de deux (ou plus) brassières 124 en matière textile de préférence, permettant d'attacher le membre supérieur 202 à l'exosquelette. Avantageusement, de telles brassières possèdent deux bandes de fixation comprenant des moyens d'assujettissement complémentaires destinés à coopérer les uns avec les autres. Ces moyens d'assujettissement peuvent être indifféremment constitués d'éléments en forme de crochets ou d'éléments en forme de boucles destinés à coopérer les uns avec les autres, les crochets s'accrochant aux boucles, de façon temporaire. De tels moyens d'assujettissement sont connus de l'homme du métier sous l'appellation « Velcro^{®} », et permettent d'ajuster la fixation à la morphologie de l'utilisateur.

L'utilisation de deux (ou plus) brassières 124 permet de limiter les degrés de liberté du bras du membre supérieur par rapport au moyen d'attache 120. En effet, l'utilisation d'une seule brassière en matière souple laisse une liberté de rotation élevée au membre supérieur sur le moyen d'attache 120, autrement dit le rotulage, ou jeu angulaire, entre le membre supérieur et le moyen d'attache 120 est élevé. Dans cette situation, les mouvements effectués par l'utilisateur, autrement dit les efforts produits, ne sont pas entièrement utilisés pour faire pivoter le bras 120 de l'exosquelette, et ce dernier ne suit pas non plus de près le mouvement naturel de l'utilisateur. L'utilisation d'au moins deux brassières 124 séparées d'une distance non nulle permet ainsi d'augmenter le confort d'utilisation et l'efficience de l'exosquelette.

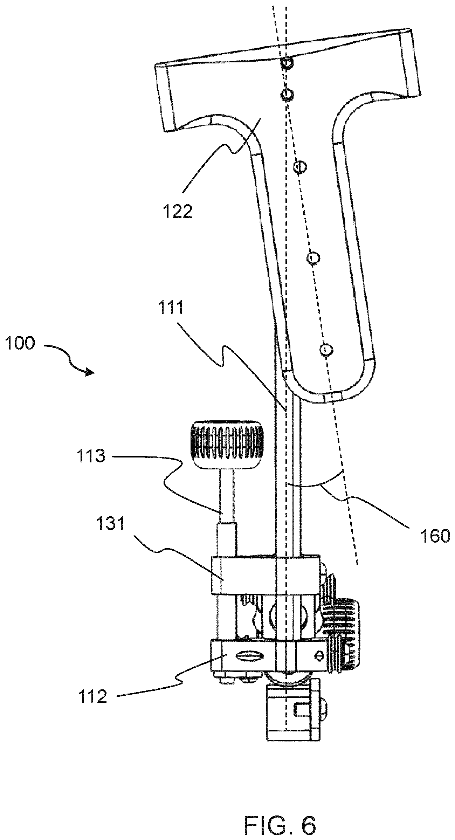

Avantageusement, comme cela est visible sur la figure 6, l'aileron d'attache 115 n'est pas aligné avec l'axe du bras 110, mais forme un angle 160 compris entre 0 et 30 degrés dans un plan dit « horizontal » (parallèle au sol) lorsque l'exosquelette est en utilisation dans la position « intermédiaire » ou « de travail ».

En d'autres termes, en position « de travail », la projection de l'axe de symétrie du moyen d'attache 120, passant par les coussins 122, et la projection de l'axe du bras 110 sur un plan horizontal se coupent avec un angle 160 aigu compris entre 0 et 30 degrés.

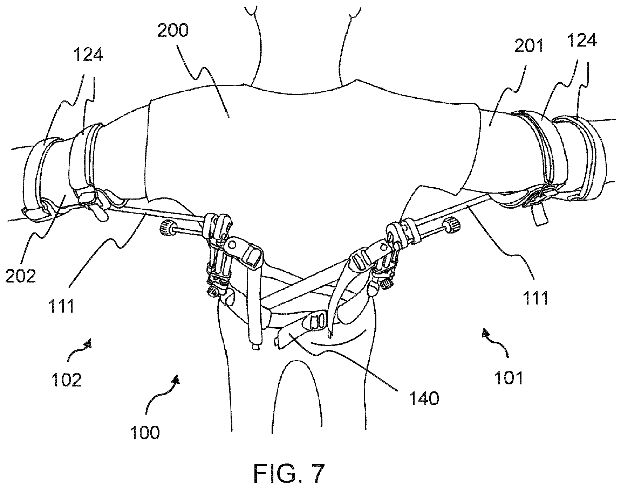

De cette manière, l'extrémité arrière du bras 110 est orienté légèrement en éloignement de l'utilisateur, permettant ainsi d'éviter les collisions entre le bras 110 et les flancs de l'utilisateur, comme cela est illustré à la figure 7.

Selon un mode de réalisation alternatif, l'exosquelette selon l'invention comprend un nombre d'éléments élastiques supérieurs à un.

Une multiplicité de combinaisons sont possibles, si bien qu'aucune description exhaustive de ces combinaisons ne pourra être donnée, et il sera compris que toute structure de type « autocontrainte » selon les mêmes principes de conception est réalisable.

Par exemple, des éléments élastiques 132 assimilables à des ressorts de tension sont intégrés en série et/ou en parallèle à l'organe de compensation 130. L'utilisation d'élément élastiques 132 de constante élastique plus faibles et de dimensions plus réduites que dans le mode de réalisation préférentiel à un seul élément élastique décrit précédemment permet cependant d'obtenir le même comportement de sortie (illustré à la figure 5).

L'avantage procuré par cette solution, à performances égales, est une plus grande liberté de conception en termes géométriques, l'organe de compensation 130 pouvant dans cet exemple être incurvé afin d'épouser la forme du corps de l'utilisateur.

Selon une variante, la constante élastique et la longueur des éléments élastiques 132 sont différents, de manière à obtenir un comportement de sortie différent de celui illustré en figure 5.

Ainsi, des comportements beaucoup plus constants pour des positions autour de la position de travail peuvent être obtenus, c'est-à-dire que la force de compensation ressentie par l'utilisateur est quasiment constante sur une plage angulaire étendue. Un tel comportement peut être souhaitable dans le cadre de certaines activités, ou la charge ne varie pas en fonction de l'angle formé par le bras et l'horizontale.

## Revendications

1. Exosquelette (100) adapté pour assister, en utilisation, au moins un membre supérieur (202) d'un porteur dudit exosquelette lors du soulèvement et du portage d'une charge, ledit exosquelette comprenant :
- au moins un bras (110) comportant à l'une de ses extrémités dite « extrémité avant », au moins un moyen d'attache (115) d'un membre supérieur du porteur,
- une structure porteuse (140) destinée à être fixée au porteur et comportant au
moins un point de support (141),
- au moins un organe de compensation (130) fixé audit bras par un premier pivot (131), s'étendant entre ledit bras et ladite structure porteuse à laquelle ledit organe est fixé, et exerçant un moment de force de compensation sur ledit bras par la déformation d'au moins un élément élastique (132),
- un élément de transmission d'efforts (150) s'étendant entre un point bas de l'organe de compensation et une extrémité dite « extrémité arrière » dudit bras opposée à l'extrémité avant,
l'au moins un élément élastique et ledit élément de transmission d'efforts étant sollicités en continu en traction lors de l'utilisation de l'exosquelette, et étant configurés de sorte que le moment de force varie avec l'inclinaison du bras , et
-ledit élément de transmission étant fixé au bras par un second pivot (151) situé à l'extrémité arrière du bras, le premier pivot étant situé entre le second pivot et l'extrémité avant du bras.

2. Exosquelette (100) selon la revendication 1, ledit bras (110) comportant un mécanisme de réglage de la distance entre lesdits premier pivot (131) et second pivot (151).

3. Exosquelette (100) selon la revendication 2, dans lequel le mécanisme de réglage comprend :
- une ouverture du premier pivot dans laquelle le bras est apte à coulisser,
- une platine de réglage (112) située à l'une des extrémités du bras, ladite platine étant solidaire d'une vis (113) sans fin coopérant avec une ouverture filetée dudit pivot.

4. Exosquelette (100) selon l'une des revendications 1 à 3, dans lequel l'organe de compensation (130) comprend un élément élastique se trouvant dans
- un état de tension minimale lorsque le membre supérieur (202) est situé dans une première position extrême dite « haute » et
- dans un état de tension maximale lorsque le membre supérieur est situé dans une seconde position extrême dite « de repos », et
- la tension dudit élément élastique entrainant une rétraction de l'organe de compensation, se trouvant dans un état déployé et respectivement dans un état rétracté maximal lorsque le membre supérieur est situé dans la position haute, respectivement de repos.

5. Exosquelette (100) selon l'une des revendications 1 à 4, ledit organe de compensation (130) comportant
- une barre supérieure (133) et
- une barre inférieure (134), lesdites barres étant parallèles et
- une extrémité supérieure de la barre inférieure étant solidaire d'une platine supérieure (135) et
- une extrémité inférieure de la barre supérieure étant solidaire d'une platine inférieure (136),
la barre supérieure, respectivement inférieure, coulissant dans une ouverture de la platine supérieure, respectivement inférieure, et ledit élément élastique (132) s'étendant entre la platine supérieure et la platine inférieure.

6. Exosquelette (100) selon l'une des revendications 1 à 5, l'au moins un élément élastique (132) étant un câble élastique comportant une âme élastique, préférentiellement en caoutchouc, et une gaine de protection, préférentiellement en matériau tissé possédant une capacité élastique.

7. Exosquelette (100) selon l'une des revendications 1 à 6, l'élément de transmission d'efforts (150) comportant un élément longiforme sensiblement sans capacité de déformation élastique.

8. Exosquelette (100) selon la revendication 7, l'élément de transmission d'efforts (150) comportant deux élément longiformes s'étendant parallèlement l'un à l'autre de part et d'autre de l'organe de compensation.

9. Exosquelette (100) selon la revendication 7 ou 8, l'élément longiforme étant un câble.

10. Exosquelette (100) selon l'une des revendications 1 à 9, ledit point de support (414) étant un logement sphérique et l'organe de compensation comportant une tête sphérique, de manière à former une liaison rotule.

11. Exosquelette (100) selon l'une des revendications 1 à 10, ladite structure porteuse (140) étant une ceinture pelvienne adaptée pour enserrer les hanches et/ou la taille du porteur.

12. Exosquelette (100) selon l'une des revendications 1 à 11, ledit moyen d'attache comportant un coussin longitudinal (122), les projections de l'axe dudit coussin et de l'axe du bras sur un plan dit « horizontal » se coupant selon un angle (160) compris entre 0 et 30 degrés, lorsque l'exosquelette est situé dans une position dite « de travail ».

## Patentansprüche

1. Exoskelett (100), das dazu ausgelegt ist, im Gebrauch mindestens ein oberes Glied (202) eines Trägers des Exoskeletts beim Heben und Tragen einer Last zu unterstützen, wobei das Exoskelett Folgendes umfasst:
- mindestens einen Arm (110), der an einem seiner Enden, das als "vorderes Ende" bezeichnet wird, mindestens ein Befestigungsmittel (115) für ein oberes Glied des Trägers aufweist,
- eine lasttragende Struktur (140), die dazu bestimmt ist, mit dem Träger verbunden zu werden, und mindestens einen Stützpunkt (141) aufweist,
- mindestens ein Ausgleichselement (130), das mit dem Arm über einen ersten Drehzapfen (131) verbunden ist, sich zwischen dem Arm und der lasttragenden Struktur, an dem das Element befestigt ist, erstreckt und durch die Verformung mindestens eines elastischen Elements (132) ein Moment der Ausgleichskraft auf den Arm ausübt,
- ein Kraftübertragungselement (150), das sich zwischen einem Tiefpunkt des Ausgleichselements und einem Ende, das als "hinteres Ende" bezeichnet wird, des Arms gegenüber dem vorderen Ende erstreckt,
- wobei das mindestens eine elastische Element und das Kraftübertragungselement während des Gebrauchs des Exoskeletts kontinuierlich unter Spannung beansprucht werden und dazu konfiguriert sind, das Kraftmoment mit der Neigung des Arms zu variieren,
- wobei das Übertragungselement am Arm durch einen zweiten Drehzapfen (151) befestigt ist, der sich am hinteren Ende des Arms befindet, wobei sich der erste Drehzapfen zwischen dem zweiten Drehzapfen und dem vorderen Ende des Arms befindet.

2. Exoskelett (100) nach Anspruch 1, wobei der Arm (110) einen Einstellmechanismus für den Abstand zwischen dem ersten Drehzapfen (131) und dem zweiten Drehzapfen (151) aufweist.

3. Exoskelett (100) nach Anspruch 2, wobei der Einstellmechanismus Folgendes umfasst:
- eine Öffnung des ersten Drehzapfens, in der der Arm gleiten kann,
- eine Einstellplatte (112), die sich an einem der Enden des Arms befindet, wobei die Platte an einer Schneckenwelle (113) befestigt ist, die mit einer Gewindeöffnung des Drehzapfens des Arms zusammenwirkt.

4. Exoskelett (100) nach einem der Ansprüche 1 bis 3, wobei das Ausgleichselement (130) ein elastisches Element umfasst, das sich in
- einem Zustand minimaler Spannung, wenn sich das obere Glied (202) in einer ersten Endposition befindet, die als "obere Endposition" bezeichnet wird, und
- einem Zustand maximaler Spannung, wenn sich das obere Glied in einer zweiten Endposition befindet, die als "Ruheposition" bezeichnet wird, befindet und
- wobei die Spannung des elastischen Elements ein Zurückziehen des Ausgleichselements bewirkt, das sich in einem entfalteten Zustand bzw. in einem maximal zurückgezogenen Zustand befindet, wenn sich das obere Glied in der oberen bzw. der Ruheposition befindet.

5. Exoskelett (100) nach einem der Ansprüche 1 bis 4, wobei das Ausgleichselement (130) Folgendes aufweist:
- eine obere Stange (133) und
- eine untere Stange (134), wobei die Stangen parallel sind und
- ein oberes Ende der unteren Stange an einer oberen Platte (135) befestigt ist und
- ein unteres Ende der oberen Stange an einer unteren Platte (136) befestigt ist,
wobei die obere bzw. die untere Stange in einer Öffnung der oberen bzw. der unteren Platte gleitet und das elastische Element (132) sich zwischen der oberen Platte und der unteren Platte erstreckt.

6. Exoskelett (100) nach einem der Ansprüche 1 bis 5, wobei das mindestens eine elastische Element (132) ein elastisches Kabel ist, das einen elastischen Kern, vorzugsweise aus Gummi, und eine Schutzhülle, vorzugsweise aus einem gewebten Material mit elastischer Kapazität, aufweist.

7. Exoskelett (100) nach einem der Ansprüche 1 bis 6, wobei das Kraftübertragungselement (150) ein längliches Element ist, das im Wesentlichen keine elastische Verformungsfähigkeit aufweist.

8. Exoskelett (100) nach Anspruch 7, wobei das Kraftübertragungselement (150) zwei längliche Elemente aufweist, die sich parallel zueinander auf beiden Seiten des Ausgleichselements erstrecken.

9. Exoskelett (100) nach Anspruch 7 oder 8, wobei das längliche Element ein Kabel ist.

10. Exoskelett (100) nach einem der Ansprüche 1 bis 9, wobei der Stützpunkt (414) ein kugelförmiges Gehäuse ist und das Ausgleichselement einen kugelförmigen Kopf aufweist, so das eine Kugelgelenkverbindung gebildet wird.

11. Exoskelett (100) nach einem der Ansprüche 1 bis 10, wobei die lasttragende Struktur (140) ein Beckengürtel ist, der dazu ausgelegt ist, die Hüften und/oder die Taille des Trägers zu umschließen.

12. Exoskelett (100) nach einem der Ansprüche 1 bis 11, wobei das Befestigungsmittel ein Längskissen (122) aufweist, wobei sich die Projektionen der Achse des Kissens und der Achse des Arms auf einer sogenannten "horizontalen" Ebene in einem Winkel (160) zwischen 0 und 30 Grad schneiden, wenn sich das Exoskelett in einer sogenannten "Arbeitsposition" befindet.

## Claims

1. An exoskeleton (100) adapted to assist, in use, at least one upper limb (202) of a wearer of said exoskeleton when lifting and carrying a load, said exoskeleton comprising:
- at least one arm (110) including at one of its ends called "front end", at least one means (115) for attaching an upper limb of the wearer,
- a load-bearing structure (140) intended to be secured to the wearer and including at least one support point (141),
- at least one compensation member (130) secured to said arm by a first pivot (131), extending between said arm and said load-bearing structure to which said member is secured, and exerting a compensation force moment on said arm by the deformation of at least one elastic element (132),
- a force transmission element (150) extending between a low point of the compensation member and an end called "rear end" of said arm opposite to the front end,
the at least one elastic element and said force transmission element being continuously loaded in tension during use of the exoskeleton, and being configured so that the force moment varies with the inclination of the arm, and
said transmission element being secured to the arm by a second pivot (151) located at the rear end of the arm, the first pivot being located between the second pivot and the front end of the arm.

2. The exoskeleton (100) according to claim 1, said arm (110) including a mechanism for setting the distance between said first pivot (131) and second pivot (151).

3. The exoskeleton (100) according to claim 2, wherein the setting mechanism comprises:
- an opening of the first pivot in which the arm is able to slide,
- a setting plate (112) located at one of the ends of the arm, said plate being secured to a worm screw (113) cooperating with a threaded opening of said pivot.

4. The exoskeleton (100) according to one of claims 1 to 3, wherein the compensation member (130) comprises an elastic element which is in
- a state of minimum tension when the upper limb (202) is located in a so-called "high" first extreme position, and
- in a state of maximum tension when the upper limb is located in a so-called "rest" second extreme position, and
- the tension of said elastic element causing a retraction of the compensation member, which is in a deployed state and respectively in a maximum retracted state when the upper limb is located in the high, respectively rest, position.

5. The exoskeleton (100) according to one of claims 1 to 4, said compensation member (130) including
- an upper bar (133) and
- a lower bar (134), said bars being parallel and
- an upper end of the lower bar being secured to an upper plate (135) and
- a lower end of the upper bar being secured to a lower plate (136),
the upper, respectively lower, bar sliding in an opening of the upper, respectively lower, plate and said elastic element (132) extending between the upper plate and the lower plate.

6. The exoskeleton (100) according to one of claims 1 to 5, the at least one elastic element (132) being an elastic cable including an elastic core, preferably made of rubber, and a protective sheath, preferably made of a woven material having an elastic capacity.

7. The exoskeleton (100) according to one of claims 1 to 6, the force transmission element (150) including an elongated element substantially with no elastic deformation capacity.

8. The exoskeleton (100) according to claim 7, the force transmission element (150) including two elongated elements extending parallel to one another on either side of the compensation member.

9. The exoskeleton (100) according to claim 7 or 8, the elongated element being a cable.

10. The exoskeleton (100) according to one of claims 1 to 9, said support point (414) being a spherical housing and the compensation member including a spherical head, so as to form a ball-joint connection.

11. The exoskeleton (100) according to one of claims 1 to 10, said load-bearing structure (140) being a pelvic belt adapted to grip the hips and/or the waist of the wearer.

12. The exoskeleton (100) according to one of claims 1 to 11, said attachment means including a longitudinal cushion (122), the projections of the axis of said cushion and of the axis of the arm on a so-called "horizontal" plane intersecting at an angle (160) comprised between 0 and 30 degrees, when the exoskeleton is located in a so-called "working" position.
